# EUROPEAN PATENT SPECIFICATION

(11) **EP 0 554 596 B1**
(45) Date of publication and mention of the grant of the patent: **03.06.1998**
(21) Application number: 92301044.1
(22) Date of filing: 07.02.1992
(51) Int. Cl.: G06T 17/00

(54) **Interactive multidimensional data interpretation tool**
Interaktives Gerät zum Auswerten von mehrdimensionalen Daten
Outil interactif d'interprétation de données multidimensionnelles

(43) Date of publication of application: 11.08.1993
(73) Proprietor: International Business Machines Corporation, Armonk, N.Y. 10504 (US)
(72) Inventor: Bird, Colin, Eastleigh, Hampshire, S05 7NA (GB); Chapman, Syd G., Winchester Hampshire, S021 3HZ (GB)
(74) Representative: Burt, Roger James, Dr.

(56) References cited:
- EP-A- 0 455 439
- IBM JOURNAL OF RESEARCH AND DEVELOPMENT vol. 27, no. 4, July 1983, NEW YORK US pages 356 - 366 EDWARD J. FARRELL 'Color Display and Interactive Interpretation of Three Dimensional Data'
- PATENT ABSTRACTS OF JAPAN vol. 8, no. 45 (P-257)28 February 1984 & JP-A-58 195 977 ( HITACHI SEISAKUSHO KK ) 15 November 1983

## Description

The invention relates to data interpretation tools.

One important and time-consuming task which often needs to be carried out in the interpretation of multidimensional data sets, such as might be produced in seismological, oceanographical or medical imaging, is the identification of features, such as surfaces or horizons, embedded in the data.

Conventionally, this task is carried out by using a computer display system to display 2-dimensional "slices" of the data set, one at a time. The intersection of the surface or horizon is identified by the operator and marked on each slice in turn. A suitably modified dataset is then saved for use in subsequent visualisation of the identified surface as a separate process.

A major problem with this technique is that considerable effort is required to constantly check backwards and forwards between the displayed slices to ensure consistency between the marked locations of the intersections of the surface in the different slices. This problem is particularly acute in cases where there is considerable scope for error in the location of the intersection, its identification being largely a matter of judgement on the part of the operator of the device.

One known solution to the problem is to transfer the user identified signature of data features between slices and to edit the signature in the newly displayed slice. While this does reduce the movement between slices, visualisation of the identified surface is still required as a separate step.

This invention solves this problem by providing an interactive data interpretation tool as claimed in claim 1 for enabling the identification of the positions of features in a multidimensional data set.

Such a system considerably speeds up and renders more convenient the extraction of features from a multidimensional data set because the user is able to see the slice he is currently working on in the full 3-D context of the features he has already identified in previously interpreted slices. He does not have to continually switch back and forth between displayed slices to ensure consistency of the identified features in different slices. Feature identification and visualisation of the identified features take place as a single integrated process.

A series of slices can be "stepped through" and the development of an identified feature running through the surfaces can be monitored by the user and influence the identification of the feature in the currently displayed slice.

In a preferred form of the invention the predetermined user input operation is the pressing of a mouse button or a key on a keyboard when the display cursor is positioned over a predetermined area of the display, which could be either the whole of the display surface or a small area upon which an icon representing, for example, an arrow is displayed.

Preferably the invention is implemented in the form of a computer graphics workstation with a mouse-driven user interface.

The invention finds particular, though not exclusive, application to the interpretation of seismological data sets, for example, for the identification of oil reservoirs. Other applications include oceanographic and medical imaging data sets.

An embodiment of the invention will now be described, by way of example only, with reference to the accompanying drawing, wherein:
Figure 1 shows the data interpretation tool of the embodiment of the invention; and
Figures 2, 3 and 4 show images displayed by the embodiment of the invention during the data interpretation process.

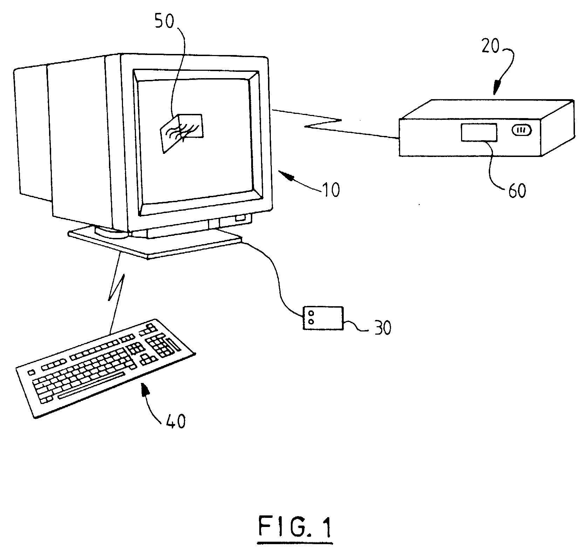

The invention is most conveniently put into practice using a suitable computer program running on a conventional general purpose graphics workstation using a graphics subroutine "package" to provide the function necessary to drive the display. A diagram of such a workstation is shown in Figure 1. It comprises display device 10; system unit 20; and user input devices, mouse 30 and keyboard 40. The system unit 20 includes a disk storage device 60.

A multidimensional data set is stored in disk storage device 60 in an appropriate format. The workstation is programmed to enable the display of 2-D slices of the data set as images 50 on display 10. The slices are displayed as projections of surfaces of a 3-D volume of interest which is generally cuboid. The data contained in the slice can be presented in any suitable manner, for example by colour mapping or texture mapping or any other of the conventional 2-D data visualisation techniques.

More than one slice may be displayed as, for example, the back and sides of the cuboid volume. Such a displayed image is shown in Fig. 1. In this case two slices are shown as the left side surface 70 and back surface 80 of the projected cuboid. The system is arranged so that if a feature such as the intersection of a surface with the slice displayed on the left face is identifiable by the user, the user can register the position of this intersection and cause it to be displayed on the screen by "drawing in" the intersection using mouse 30. The registered position is the position of the cursor on the 2-D slice. This "drawn-in" line is indicated on Figure 1 at 90.

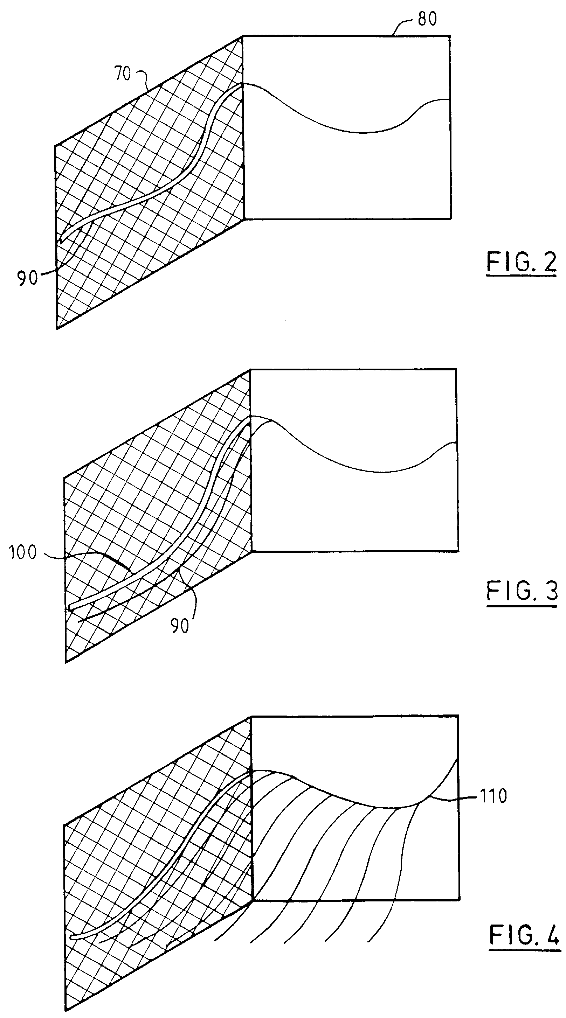

Having identified the position of the intersection in this one slice, the user can cause the display of a neighbouring slice in the data set by a user input operation. In this embodiment the user clicks on a mouse button and the co-ordinate of the displayed slice in the third dimension of the cuboid is incremented. However, the previously drawn line is retained in the image, but is displaced in the cuboid. This situation is shown in Figure 3. The user can then proceed to identify the intersection of the surface with the newly displayed slice and draw in its position in a similar manner as displayed line 100. It will be understood that the user input operation could be the operation of the mouse when the cursor is positioned over a suitable icon.

By repeating this operation for a series of slices, a representation 110 of the surface may be extruded from the volume as shown in Figure 4. The positions of the identified intersections, and thus of the surface, are at the same time stored in an appropriate form in disk storage unit 60.

It will be understood that the ability to increment the co-ordinates of the displayed slice could be arranged to allow such an extrusion to the left, to the right, forwards or backwards, up or down as required.

## Claims

1. Interactive data interpretation tool for enabling the identification of the position of a feature in a three multidimensional image data set, the tool comprising:
means for displaying an image representing a first 2-D slice of the data set whereby the 2-D slice corresponds to a 2-D subset of said 3-D data set for which the coordinate of one of said three dimensions is constant;
user input means for causing the storage of the position of a feature in the displayed image;
means operable in response to a predetermined user input operation to cause the co-ordinate of the currently displayed 2-D slice in the said one of said three dimensions of the 3-D image to be incremented whereby said means for displaying displays an incremental 2-D slice of said 3-D data set corresponding to the incremented co-ordinate; and
means for indicating the position of the feature for said first 2-D slice so as to provide an indication to the user of the position of the feature in said incremental slice.

2. Interactive data interpretation tool as claimed in Claim 1 wherein the predetermined user input operation is the pressing of a mouse button or a key on a keyboard when the display cursor is positioned over a predetermined area of the display.

3. Interactive data interpretation tool as claimed in claim 1 or claim 2 wherein the user input means is operable when the display cursor is positioned over the displayed 2-D slice to cause the storage of the position on the 2-D slice of the display cursor as the position of the feature.

4. Interactive data interpretation tool as claimed in any preceding claim wherein the features to be identified are the intersection of a surface with the displayed 2-D slice wherein the means for indicating causes the display of a line at the position in the 3-D image of previously identified such intersections.

5. Interactive data interpretation tool as claimed in any preceding claim including storage means for storing the multidimensional data set and the positions of the identified features.

6. Interactive data interpretation tool as claimed in any preceding claim in the form of a computer graphics workstation.

## Patentansprüche

1. Interaktives Datenauswertungsgerät, um die Erkennung der Position eines Merkmals in einem dreidimensionalen Bilddatensatz zu ermöglichen, wobei das Gerät folgendes umfaßt:
ein Mittel, um ein Bild anzuzeigen, das einen ersten zweidimensionalen Sektor des Datensatzes darstellt, wodurch der zweidimensionale Sektor einer zweidimensionalen Untergruppe des dreidimensionalen Datensatzes entspricht, für den die Koordinate von einer der drei Dimensionen gleichbleibend ist;
ein Benutzereingabemittel, um die Speicherung der Position eines Merkmals in dem angezeigten Bild zu veranlassen;
ein Mittel, das als Antwort auf eine vorher festgelegte Benutzereingabeoperation betriebsbereit ist, um zu bewirken, daß die Koordinate des gerade angezeigten zweidimensionalen Sektors in der einen der drei Dimensionen des dreidimensionalen Bildes erhöht wird, wodurch das Anzeigemittel einen schrittweise zunehmenden zweidimensionalen Sektor des dreidimensionalen Datensatzes, welcher der erhöhten Koordinate entspricht, anzeigt; und
ein Mittel, um die Position des Merkmals für den ersten zweidimensionalen Sektor anzugeben, um dem Benutzer einen Hinweis auf die Position des Merkmals in dem schrittweise zunehmenden Sektor zu geben.

2. Interaktives Datenauswertungsgerät nach Anspruch 1, wobei die vorher festgelegte Benutzereingabeoperation das Drükken einer Maustaste oder einer Taste auf einer Tastatur ist, wenn der Bildschirmcursor über einem vorher festgelegten Bereich des Bildschirms positioniert wird.

3. Interaktives Datenauswertungsgerät nach Anspruch 1 oder 2, wobei das Benutzereingabemittel betriebsbereit ist, wenn der Bildschirmcursor über dem angezeigten zweidimensionalen Sektor positioniert wird, um die Speicherung der Position des Bildschirmcursors auf dem zweidimensionalen Sektor als die Position des Merkmals zu veranlassen.

4. Interaktives Datenauswertungsgerät nach einem der vorhergehenden Ansprüche, wobei die zu erkennenden Merkmale die Schnittpunkte einer Fläche und des angezeigten zweidimensionalen Sektors sind, wobei das Angabemittel bewirkt, daß in dem dreidimensionalen Bild an den Positionen von solchen zuvor erkannten Schnittpunkten eine Linie angezeigt wird.

5. Interaktives Datenauswertungsgerät nach einem der vorhergehenden Ansprüche, das ein Speichermittel zur Speicherung des mehrdimensionalen Datensatzes und der Positionen der erkannten Merkmale enthält.

6. Interaktives Datenauswertungsgerät nach einem der vorhergehenden Ansprüche in Form eines Computergrafik-Arbeitsplatzrechners.

## Revendications

1. Outil interactif d'interprétation de données pour permettre l'identification de la position d'un détail dans un ensemble de données d'image tridimensionnelle, l'outil comprenant :
un moyen pour afficher une image représentant une première tranche bidimensionnelle de l'ensemble de données, d'où il résulte que la tranche bidimensionnelle correspond à un sous-ensemble bidimensionnel dudit ensemble de données tridimensionnelles pour lequel la coordonnée d'une desdites trois dimensions est constante ;
un moyen d'entrée par l'utilisateur pour entraîner la mémorisation de la position d'un détail dans l'image visualisée ;
un moyen mis en oeuvre en réponse à une opération d'entrée par l'utilisateur prédéterminée pour amener la coordonnée de la tranche bidimensionnelle actuellement visualisée dans ladite une dimension parmi les trois dimensions d'image tridimensionnelle à être incrémentée d'où il résulte que ledit moyen pour afficher affiche une tranche bidimensionnelle incrémentielle dudit ensemble de données tridimensionnelles correspondant à la coordonnée incrémentée ; et
un moyen pour indiquer la position du détail pour ladite première tranche bidimensionnelle de façon à procurer une indication à l'utilisateur de la position du détail dans ladite tranche incrémentielle.

2. Outil interactif d'interprétation de données selon la revendication 1, dans lequel l'opération d'entrée par l'utilisateur prédéterminée consiste à enfoncer un bouton d'une souris ou une touche sur un clavier lorsque le curseur de l'affichage est positionné sur une zone prédéterminée de l'affichage.

3. Outil interactif d'interprétation de données selon la revendication 1 ou la revendication 2, dans lequel le moyen d'entrée par l'utilisateur est mis en oeuvre lorsque le curseur d'affichage est positionné sur la tranche bidimensionnelle visualisée afin d'entraîner la mémorisation de la position sur la tranche bidimensionnelle du curseur de l'affichage comme la position du détail.

4. Outil interactif d'interprétation de données selon l'une quelconque des revendications précédentes, dans lequel les détails qui doivent être identifiés sont l'intersection d'une surface avec la tranche bidimensionnelle visualisée, dans lesquels le moyen d'indication entraîne l'affichage d'une ligne à la position dans l'image tridimensionnelle de telles intersections identifiées précédemment.

5. Outil interactif d'interprétation de données selon l'une quelconque des revendications précédentes, comprenant un moyen de mémorisation pour mémoriser les ensembles de données multidimensionnels et les positions des détails identifiés.

6. Outil interactif d'interprétation de données selon l'une quelconque des revendications précédentes sous la forme d'une station de travail graphique informatique.
